# EUROPÄISCHE PATENTSCHRIFT

(11) **EP 0 386 430 B1**
(45) Veröffentlichungstag und Bekanntmachung des Hinweises auf die Patenterteilung: **26.03.1997**
(21) Anmeldenummer: 90101434.0
(22) Anmeldetag: 24.01.1990
(51) Int. Cl.: A01D 89/00

(54) **Stützräder für Aufnehmer für Erntemaschinen**
Support wheels for the collectors of harvesters
Roues support pour capteurs de moissonneuses

(30) Priorität: 10.03.1989 DE 3907747
(43) Veröffentlichungstag der Anmeldung: 12.09.1990
(73) Patentinhaber: CLAAS SAULGAU GMBH, D-88340 Saulgau (DE)
(72) Erfinder: Geng, Manfred, D-7968 Saulgau, Bogenweiler (DE)

(56) Entgegenhaltungen:
- EP-A- 224 424
- EP-A- 383 121
- DE-B- 1 200 051
- FR-A- 2 241 636
- US-A- 2 620 203

## Beschreibung

Die Erfindung bezieht sich auf landwirtschaftliche Erntemaschinen nach dem Oberbegriff des Anspruches 1.

Bei Maschinen dieser Gattung (beispielsweise DAS 24 44 609 oder EP-A-02 24 424) sind die Tasträder allgemein seitlich neben den Aufsammeltrommeln (Aufnehmer) angeordnet, die ihrerseits höhenschwenkbar mit dem Fahrgestell einer Erntemaschine verbunden sind. Da die Aufsammeltrommeln in der Regel vor der Erntemaschine hergeschoben werden, besteht in unebenem Gelände immer die Gefahr, daß sich die Tasträder aufspießen oder in weichen Boden eindringen. Um dieser Gefahr auszuweichen, hat man die Tasträder schon deutlich vor der Antriebsmitte der Aufsammelvorrichtung angeordnet, was aber ihre abtastende Funktion verschlechtert, oder man hat den Schwenkpunkt der Aufsammelvorrichtung am Fahrgestell tief gelegt, was bauliche Nachteile hat.

Mit der Erfindung soll eine Abstützung für die Aufsammeltrommel geschaffen werden, die wegen eines weiter vorgezogenen Tastrades eine leichte Höhenbeweglichkeit in unebenem Gelände erlaubt und dennoch eine gute Bodenanpassung der Aufsammeltrommel ermöglicht.

Beide Bedingungen werden erfindungsgemäß dadurch erfüllt, daß an jeder Seite der Aufsammeltrommeln zwei Tasträder angeordnet sind, die in Fahrtrichtung hintereinander beidendig an Doppelschwingen gelagert sind, die ihrerseits um quer zur Fahrtrichtung liegende, mit den Aufsammeltrommeln verbundene Pendelachsen schwingbar sind.

Eine besonders vorteilhafte Anordnung ergibt sich, wenn die Tasträder entsprechend Anspruch 2 angeordnet werden, weil dann die Bodenanpassung optimiert werden kann.

Eine weitere vorteilhafte Ausgestaltung wird in Anspruch 3 beansprucht.

Die Erfindung wird anhand zweier Abbildungen beispielsweise erläutert:

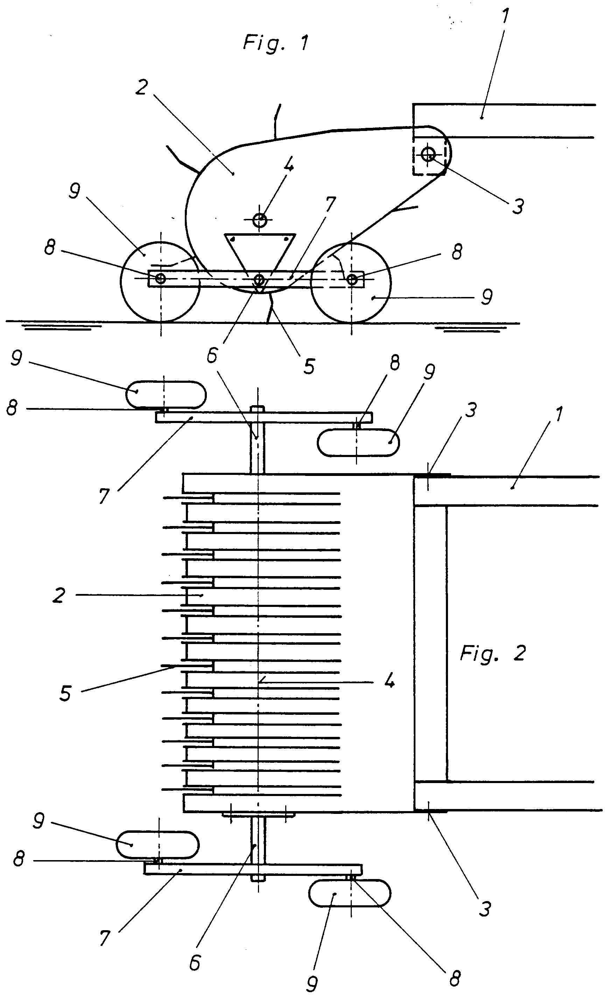

- Figur 1:: Zeigt einen Aufnehmer einer Erntemaschine in Seitenansicht und
- Figur 2: zeigt den gleichen Gegenstand von oben.

An dem Fahrgestell (1) einer Erntemaschine ist ein Aufnehmer (2) um Achsen (3) verschwenkbar gelagert. Der Aufnehmer (2) hat eine Antriebsmittelwelle (4), um die herum sich Aufnahmezinken (5) bewegen. Die Aufnahmezinken (5) sollen in der untersten Stellung dicht über den Boden geführt werden. An den Seiten der Aufnehmer (2) sind auskragende Pendelachsen (6) befestigt. Mit den Pendelachsen (6) schwingbar verbunden sind Doppelschwingen (7), die ihrerseits an ihren Enden Achszapfen (8) tragen, auf denen Laufräder (9) gelagert sind. Die Laufräder (9) können auf jeweils der gleichen Seite der Doppelschwinge (7), oder wie im Beispiel auf jeweils ungleichen Seiten der Doppelschwingen (7) liegen. Im Beispiel ist auf der linken Seite des Aufnehmers das vordere Laufrad (9) auf der Innenseite der Doppelschwinge (7) gezeigt. Es kann aber ebensogut - wie auf der rechten Seite gezeigt - auf der Aussenseite angeordnet sein. Dies kann vorteilhaft sein, um dem Laufrad (9) einen größeren Abstand zum äußersten Federzinken (5) zu geben und dadurch die Aufnahme des Erntegutes zu erleichtern.

Bei der gezeigten Ausführung trifft die Verlängerung einer gedachten Verbindungslinie zwischen den Schwenkachsen (3) und den Achszapfen (8) der vorderen Laufräder (9) in einem verhältnismässig kleinen Winkel auf den Erdboden. Dadurch, und weil das vordere Laufrad (9) nur die Hälfte einer Aufnehmerseite zu tragen hat, kann es beim Überfahren von Bodenwellen leicht nach oben ausweichen, ohne in weichem Boden einzusinken.

## Patentansprüche

1. Landwirtschaftliche Erntemaschine (1), mit einer Aufsammeltrommel (2), die von einer Tasträdervorrichtung beiderseits abgestützt wird, dadurch gekennzeichnet, daß die Tasträdervorrichtung ein vorderes Tastrad (9) und ein hinteres Tastrad (9) an den beiden Enden einer Doppelschwinge (7) umfaßt, die an Laufachsen (8) gelagert sind, während die Doppelschwinge (7) an einer waagrecht ausgerichteten Pendelachse (6) verschwenkbar geführt ist, von der an jeder Seite des Rahmenteiles der Aufsammeltrommel (2) eine angebracht ist, an der jeweils eine Doppelschwinge (7) gelagert ist.

2. Erntemaschine nach Anspruch 1, dadurch gekennzeichnet, daß von den Tasträdern (9) auf jeder Seite der Aufnehmer (2) - in Fahrtrichtung gesehen - ein Tastrad (9) vor und das andere hinter der Antriebsmitte (4) der Aufnehmer (2) liegen.

3. Erntemaschine nach Anspruch 1 oder 2, dadurch gekennzeichnet, daß die Tasträder (9) von oben gesehen an verschiedenen Seiten der Doppelschwingen (7) angeordnet sind.

## Claims

1. Agricultural harvester (1) comprising a pick-up drum (2) which is supported by a sensing wheel arrangement at both sides, characterised in that the sensing wheel arrangement includes a front sensing wheel (9) and a rear sensing wheel (9) at the two ends of a double rocker arm (7), which are mounted on axles (8), while the double rocker arm (7) is guided pivotably at a horizontally oriented swing spindle (6), of which one is disposed at each side of the frame member of the pick-up drum (2), on which a respective double rocker arm (7) is mounted.

2. A harvester according to claim 1 characterised in that of the sensing wheels (9) on each side of the pick-up means (2) - as viewed in the direction of travel - one sensing wheel (9) is disposed in front of the drive centre (4) of the pick-up means (2) and the other is disposed behind the drive centre (4).

3. A harvester according to claim 1 or claim 2 characterised in that the sensing wheels (9), as viewed from above, are disposed at different sides of the double rocker arms (7).

## Revendications

1. Récolteuse agricole (1) munie d'un tambour de ramassage (2) soutenu, de part et d'autre, par un dispositif à roues de terre, caractérisée par le fait que le dispositif à roues de terre comprend, aux deux extrémités d'une biellette double (7), une roue de terre (9) antérieure et une roue de terre (9) postérieure qui sont montées sur des axes de roulement (8), cependant que la biellette double (7) est guidée, de manière pivotante, sur un essieu suspendu (6) orienté horizontalement, installé individuellement sur chaque côté de la partie du châssis du tambour de ramassage (2), et sur lequel une biellette double (7) est respectivement montée.

2. Récolteuse selon la revendication 1, caractérisée par le fait que, parmi les roues de terre (9) situées de chaque côté des collecteurs (2) - en observant par rapport à la direction du déplacement -, une roue de terre (9) se trouve devant, et l'autre se trouve derrière le point central d'entraînement (4) desdits collecteurs (2).

3. Récolteuse selon la revendication 1 ou 2, caractérisée par le fait que les roues de terre (9) sont disposées, observées par-dessus, sur différents côtés des biellettes doubles (7).
